(19) Europäisches Patentamt
European Patent Office
Office européen des brevets

(11) Veröffentlichungsnummer: **0 261 075 B1**

(12) **EUROPÄISCHE PATENTSCHRIFT**

(45) Veröffentlichungstag der Patentschrift: **11.03.92**

(51) Int. Cl.$^5$: **C09B 1/503**

(21) Anmeldenummer: **87810446.2**

(22) Anmeldetag: **03.08.87**

# (54) Verfahren zur Herstellung von Dispersionsfarbstoffen.

(30) Priorität: **08.08.86 CH 3199/86**

(43) Veröffentlichungstag der Anmeldung:
**23.03.88 Patentblatt 88/12**

(45) Bekanntmachung des Hinweises auf die Patenterteilung:
**11.03.92 Patentblatt 92/11**

(84) Benannte Vertragsstaaten:
**CH DE ES FR GB IT LI**

(56) Entgegenhaltungen:
**DE-A- 2 015 587**
**US-A- 3 806 524**

(73) Patentinhaber: **CIBA-GEIGY AG**
**Klybeckstrasse 141**
**CH-4002 Basel(CH)**

(72) Erfinder: **Käser, Adolf, Dr.**
**Spitzackerstrase 118**
**CH-4103 Bottmingen(CH)**

EP 0 261 075 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von Dispersionsfarbstoffen.

Aus der DE-A-20 15 587 sind bereits Dispersionsfarbstoffe der weiter unten aufgeführten Formel (1) bekannt. Diese werden hergestellt, indem man 1-Amino-2-hydroxyalkoxy-4-hydroxyanthrachinon in Pyridin auflöst und mit einem Chlorameisensäureester umsetzt. Anschliessend wird Methanol zugegeben und der sich ausscheidende Farbstoff abfiltriert.

Diese Arbeitsweise ist jedoch mit einigen Nachteilen behaftet. Da die Reaktionsmischung in Pyridin zum Gelieren neigt, muss man grosse Mengen Pyridin zusetzen, um dies zu vermeiden, man erhält also schlechte Raum-/Zeitausbeuten. Zudem ist die Kristallform nicht ganz befriedigend, was eine Thermoformierung der Kristalle erfordert, wobei die Gefahr der Umesterung besteht. Ausserdem ist die Regenerierung der Lösungsmittel aufwendig.

Der vorliegenden Erfindung lag die Aufgabe zugrunde, ein verbessertes Herstellungsverfahren für die genannten Farbstoffe zu finden. Diese Aufgabe wird dadurch gelöst, dass man in inerten Lösungsmitteln arbeitet. Man erhält die Farbstoffe in der gewünschten Kristallform und zudem vielfach in höherer Ausbeute. Man kann ausserdem in konzentrierten Lösungen arbeiten und die Regenierung der Lösungsmittel ist einfacher.

Gegenstand der vorliegenden Erfindung ist somit ein Verfahren zur Herstellung von Dispersionsfarbstoffen der Formel

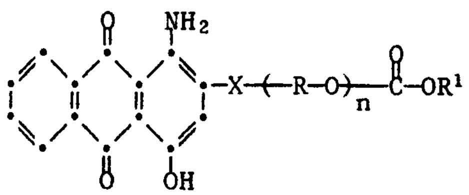

(1) ,

worin

X -O- oder -S-,

R $C_2$-$C_6$-Alkylen,

$R^1$ einen gegebenenfalls substituierten aliphatischen, cycloaliphatischen oder aromatischen Rest und

n eine ganze Zahl von 1 bis 3 bedeuten,

indem man eine Verbindung der Formel

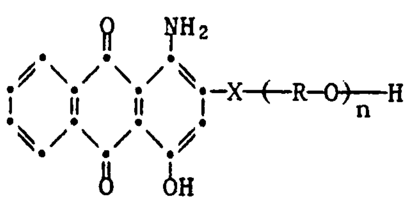

(2) ,

worin X, R und n die oben angegebene Bedeutung aufweisen, mit einem Halogenameisensäureester der Formel

Hal-COOR$^1$ (3)

worin Hal Chlor oder Brom ist und $R^1$ die oben angegebene Bedeutung aufweist, umsetzt, dadurch gekennzeichnet, dass man die Reaktion in einem inerten organischen Lösungsmittel in Gegenwart von 1 bis 2 Mol einer heterocyclischen tertiären Stickstoffbase pro Mol Verbindung der Formel (2) durchführt.

In den obigen Formeln bedeutet X vorzugswise -O-.

R bedeutet einen unverzweigten oder verzweigten Alkylenrest mit 2 bis 6 Kohlenstoffatomen, welcher substituiert sein kann, z.B. durch Hydroxy. Geeignete Rest sind beispielsweise Ethylen, 1,2- oder 1,3-Propylen, 1,6-Hexylen, 1-Methyl-1,3-propylen, 2-Methyl-1,3-propylen, 3-Methyl-1,3-propylen, 2,2-Dimethyl-1,3-propylen, 2-Hydroxy-1,3-propylen. Vorzugsweise handelt es sich um Ethylen, 1,3-Propylen oder 2-Hydroxy-1,3-propylen.

n bedeutet eine ganze Zahl von 1 bis 3, vorzugsweise 1 oder 2.

Stellt $R^1$ einen aliphatischen Rest dar, so handelt es sich beispielsweise um eine gerad- oder verzweigtkettige, gegebenenfalls substituierte Alkyl- oder Alkenylgruppe (im letzteren Falle besonders um eine $\Delta^2$-Alkenylgruppe) mit vorzugsweise 1 bis 8 Kohlenstoffatomen.

Als Substituenten können diese aliphatischen Reste z.B. Halogene, wie Chlor oder Brom, eine niedere Alkoxygruppe, eine Aryloxygruppe, wie z.B. Phenoxy, sowie auch einen carbocyclischen Ring, besonders aromatischen Charakters, wie den Phenylrest, oder heterocyclische Ringe, wie den Thienyl-(2)-, Furyl-(2)- oder Tetrahydrofuryl-(2)-rest enthalten.

Als $R^1$ verkörpernde cycloaliphatische Reste kommen beispielsweise Cycloalkylgruppen mit vorzugsweise 5- oder 6-gliedrigen Ringen und besonders die Cyclohexyl- oder Methylcyclohexylgruppe in Frage.

Wenn $R^1$ einen aromatischen Rest bedeutet, so gehört dieser Rest vorzugsweise der Benzolreihe an; er kann übliche nichtionogene Substituenten enthalten. Als solche Substitutenten seien beispielsweise Halogen, wie Fluor, Chlor oder Brom, oder niedere Alkylgruppen, wie die Methylgruppe genannt.

Geeignete Reste $R^1$ sind beispielsweise: Methyl, Ethyl, n- oder iso-Propyl, n-, iso- oder tert.-Butyl, Amyl, Alkyl, Chlormethyl, Brommethyl, Methoxyethyl, Ethoxyethyl, Phenoxyethyl, Benzyl, Cyclohexyl, Methylcyclohexyl, Phenyl, Chlorphenyl, Methylphenyl oder Dimethylphenyl.

Besonders bevorzugte Reste $R^1$ sind Methyl, Ethyl und Phenyl.

Die Verbindungen der Formeln (2) und (3) sind bekannt oder können nach üblichen Methoden hergestellt werden.

Die Umsetzung der Anthrachinonverbindung der Formeln (2) mit dem Halogenameisensäureester erfolgt in einem inerten Lösungsmittel bei einer Temperatur von etwa 10° bis 150°C, vorzugsweise bei einer Temperatur zwischen 40 und 100°C. Die optimale Temperatur hängt z.B. von der Löslichkeit der Edukte ab und kann leicht ermittelt werden.

Geeignete inerte organische Lösungsmittel sind z.B. gegebenenfalls halogenierte oder nitrierte aromatische Kohlenwasserstoffe, wie Toluol, Xylole, Chlorbenzol, Dichlorbenzol, Nitrobenzol sowie aliphatische gegebenenfalls halogenierte Kohlenwasserstoffe wie Chloroform, Tetrachlorkohlenstoff, Dichlorethan oder Tetrachlorethan, ferner aliphatische Ketone. Bevorzugt sind Toluol und Xylol.

Die Anthrachinonverbindungen der Formel (2) und die Halogenameisensäureester der Formel (3) können in stöchiometrischen Mengen eingesetzt werden. Im allgemeinen ist es jedoch günstig, den Ester im Ueberschuss einzusetzten, z.B. im Ueberschuss von 5 bis 100 Mol%, vorzugsweise 10 bis 75 Mol%, bezogen auf die Anthrachinonverbindungen.

Die Reaktion erfolgt in Gegenwart von 1 bis 2 Mol, vorzugsweise 1 bis 1,6 Mol, einer heterocyclischen tertiären Stickstoffbase pro Mol Anthrachinonverbindung der Formel (2).

Als heterocyclische tertiäre Stickstoffbase kommen z.B. in Betracht: Pyridin, 2-, 3- oder 4-Methylpyridin, 2-, 3- oder 4-Ethylpyridin, 2,3-, 2,4-, 2,5-, 2,6-, 3,4,- oder 3,5-Dimethylpyridin, 5-Ethyl-2-methylpyridin, Chinolin oder 4-Methylchinolin. Bevorzugt unter diesen sind 3-Methylpyridin, 4-Methylpyridin und insbesondere Pyridin.

Nach beendeter Reaktion können die erhaltenen Farbstoffe wie üblich aufgearbeitet werden, z.B. indem man die Reaktionsmischung zur Trockne eindampft und den Rückstand auf übliche Weise entsalzt.

Vorzugsweise kühlt man jedoch nach beendeter Reaktion die Reaktionsmischung ab, z.B. auf Raumtemperatur, setzt 1 bis 2 Mol Wasser und 1 bis 2 Mol einer anorganischen Base pro Mol Anthrachinonverbindung der Formel (2) zu.

Anschliessend entfernt man das Lösungsmittel und die heterocyclische tertiäre Stickstoffbase, z.B. durch Filtration oder Destillation, und entsalzt den Farbstoff falls gewünscht. Bei dieser Arbeitsweise lassen sich das Lösungsmittel und dei Stickstoffbase besonders gut für die Wiederverwendung zurückgewinnen.

Als anorganische Base kommen z.B. Alkali- oder Erdalkalimetallhydroxide, -carbonate oder -phosphate in Frage, wie z.B. Natrium- oder Kaliumcarbonat oder -hydrogencarbonat, Natrium-, Kalium- oder Bariumhydroxid, Dinatriumhydrogenphosphat oder Natriumphosphat. Vorzugsweise verwendet man Natriumhydroxid, -carbonat oder -hydrogen-carbonat oder Dinatriumhydrogenphosphat.

Die erhaltenen Farbstoffe entsprechen in ihrem färberischen Verhalten den Farbstoffen, die nach dem bekannten Verfahren in Pyridin erhalten werden, und eignen sich vor allem zum Färben von Textilmaterialien aus Polyester in orangeroten bis roten Farbtönen. Die folgenden Beispiele veranschaulichen die Erfindung. Prozente bedeuten Gewichtsprozente und die Temperaturen sind in Grad Celsius angegeben.

Beispiel 1: 67,3 g 1-Amino-2-(2′-hydroxyethoxy)-4-hydroxyanthrachinon werden in 220 g Toluol und 23,1 g Pyridin suspendiert. Innert 2 Stunden werden bei 70 - 75° unter kräftigem Rühren 42,3 g Chlorameisensäurephenylester zugetropft. Nach beendetem Zutropfen wird noch 15 Minuten bei 70° nachgerührt. Man lässt auf 20° abkühlen, verrührt während 15 Minuten mit 7,2 g Wasser und während einer Stunde mit 47,9 g $Na_2HPO_4$ wasserfrei. Dann wird auf 10° gekühlt, genutscht und mit 45 g Toluol gewaschen. Der toluolfeuchte Presskuchen wird mit Wasserdampf destilliert, abgenutscht und getrocknet. Man erhält in einer

Ausbeute von 82,5 g einen roten Farbstoff, welcher Polyesterfasermaterialien gleich färbt, wie ein in Pyridin hergestelltes Muster.

Beispiel 2: 67,3 g 1-Amino-2-(2'-hydroxyethoxy)-4-hyroxyanthrachinon werden in 220 g Xylol und 42,7 g Chlorameisensäureethylester suspendiert. Innerhalb 2 Stunden werden bei 65-70° unter kräftigem Rühren 27,0 g pyridin zugetropft. Anschliessend wird noch 15 Minuten bei 70° nachgerührt. Man lässt auf 20° abkühlen, verrührt während 15 Minuten mit 7,2 g Wasser, gibt 21,5 g $Na_2CO_3$ zu und rührt 1 Stunde nach. Dann wird auf 10° gekühlt, abgenutscht und mit 45 g Xylolgemisch gewaschen. Der xylolfeuchte Presskuchen wird bei 80° im Vakuum vom Lösungsmittel befreit. Zur Entsalzung wird der Rohrfarbstoff in 500 ml Wasser während 30 Min. bei 60° verrührt (pH-Wert 6 - 9) filtriert und mit Wasser salzfrei gewaschen. Man erhält 107,0 g feuchten Farbstoff mit einem Trockengehalt von 66,1 %.

Beispiel 3: 202 g 1-Amino-2-(2'-hydroxyethoxy)-4-hydroxyanthrachinon werden in 660 g Toluol und 70,2 g Pyridin vorgelegt. Innerhalb je 1 Stunde werden bei 70° zuerst 65,6 g Chlorameisensäureethylester und anschliessend 58,2 g Chlorameisensäurephenylester zudosiert. Man rührt während 15 Minuten bei 70° nach, lässt auf 20° abkühlen, verrührt mit 20 g Wasser und anschliessend mit 82, 0 g $NaHCO_3$. Nach Abklingen der $CO_2$-Entwicklung wird durch vorsichtiges Aufheizen anfänglich ohne Vakuum später mit schwachem Vakuum das Lösungsmittel abdestilliert. Es werden 348,6 g salzhaltiger Farbstoff erhalten, welcher wie in Beispiel 2 beschrieben, entsalzt wird. Es resultieren 441,7 g feuchter Farbstoff mit einem Trockengehalt von 59.0 %. Dieser färbt Polyesterfasermaterialien in roten Tönen.

Beispiel 4: Arbeitet man wie im Beispiel 1 beschrieben, verwendet jedoch anstelle von 1-Amino-2-(2'-hydroxyethoxy)-4-hydroxyanthrachinon eine äquivalente Menge 1-Amino-2-(2'-hydroxyethylthio)-4-hydroxyanthrachinon, so erhält man den analogen Farbstoff wie im Beispiel 1. Dieser färbt Polyestermaterial in violetten Tönen.

**Patentansprüche**

**1.** Verfahren zur Herstellung von Dispersionsfarbstoffen der Formel

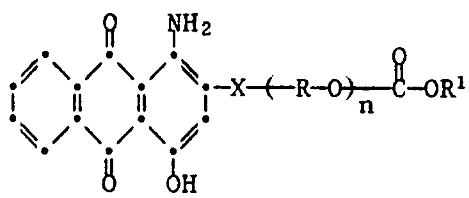

(1) ,

worin

X -O- oder -S-,

R $C_2$-$C_6$-Alkylen,

$R^1$ einen gegebenenfalls substituierten aliphatischen, cycloaliphatischen oder aromatischen Rest und

n eine ganze Zahl von 1 bis 3 bedeuten,

indem man eine Verbindung der Formel

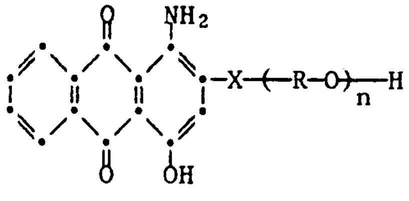

(2) ,

worin X, R und n die oben angegebene Bedeutung aufweisen, mit einem Halogenameisensäureester der Formel

Hal-$COOR^1$ (3)

worin Hal Chlor oder Brom ist und $R^1$ die oben angegebene Bedeutung aufweist, umsetzt, dadurch gekennzeichnet, dass man die Reaktion in einem inerten organischen Lösungsmittel in Gegenwart von

1 bis 2 Mol einer heterocyclischen tertiären Stickstoffbase pro Mol Verbindung der Formel (2) durchführt.

**2.** Verfahren gemäss Anspruch 1 zur Herstellung von Farbstoffen der Formel (1), worin X gleich -O- bedeutet.

**3.** Verfahren gemäss Anspruch 1 zur Herstellung von Farbstoffen der Formel (1), worin R einen unverzweigten oder verzweigten Alkylenrest mit 2 bis 6 Kohlenstoffatomen bedeutet, der unsubstituiert ist oder durch Hydroxy substituiert ist.

**4.** Verfahren gemäss Anspruch 2, worin R Ethylen, 1,3-Propylen oder 2-Hydroxy-1,3-propylen bedeutet.

**5.** Verfahren gemäss Anspruch 1 zur Herstellung von Farbstoffen der Formel (1), worin n 1 oder 2 bedeutet.

**6.** Verfahren gemäss Anspruch 1 zur Herstellung von Farbstoffen der Formel (1), worin $R^1$ eine geradkettige oder verzweigte, gegebenenfalls substituierte Alkyl- oder Alkylengruppe mit 1 bis 8 Kohlenstoffatomen, eine Cycloalkylgruppe mit einem 5- oder 6-gliedrigen Ring oder einen gegebenenfalls substituierten Benzolring bedeutet.

**7.** Verfahren gemäss Anspruch 6, worin $R^1$ Methyl, Ethyl, n- oder iso-Propyl, n-, iso- oder tert.-Butyl, Amyl, Alkyl, Chlormethyl, Bromethyl, Methoxyethyl, Ethoxyethyl, Phenoxyethyl, Benzyl, Cyclohexyl, Methylcyclohexyl, Phenyl, Chlorphenyl, Methylphenyl oder Dimethylphenyl bedeutet.

**8.** Verfahren gemäss Anspruch 7, worin $R^1$ Methyl, Ethyl oder Phenyl ist.

**9.** Verfahren gemäss Anspruch 1 zur Herstellung von Farbstoffen der Formel (1), worin X gleich -O- bedeutet, R einen unverzweigten oder verzweigten Alkylenrest mit 2 bis 6 Kohlenstoffatomen bedeutet, der unsubstituiert ist oder durch Hydroxy substituiert ist und $R^1$ eine geradkettige oder verzweigte, gegebenenfalls substituierte Alkyl- oder Alkylengruppe mit 1 bis 8 Kohlenstoffatomen, eine Cycloalkylgruppe mit einem 5- oder 6-gliedrigen Ring oder einen gegebenenfalls substituierten Benzolring bedeutet.

**10.** Verfahren gemäss Anspruch 9, worin X gleich -O- bedeutet, R Ethylen, 1,3-Propylen oder 2-Hydroxy-1,3-propylen, n 1 oder 2 und $R^1$ Methyl, Ethyl oder Phenyl ist.

**11.** Verfahren gemäss einem der Ansprüche 1 bis 10, dadurch gekennzeichnet, dass man die Umsetzung bei 0° bis 150°C, vorzugsweise 40° - 100°C durchführt.

**12.** Verfahren gemäss einem der Ansprüche 1 bis 11, dadurch gekennzeichnet, dass man als inertes Lösungsmittel einen gegebenenfalls halogenierten oder nitrierten aromatischen Kohlenwasserstoff, einen gegebenenfalls halogenierten aliphatischen Kohlenwasserstoff oder ein aliphatisches Keton verwendet.

**13.** Verfahren gemäss Ansprüche 12, dadurch gekennzeichnet, dass man Toluol oder Xylol verwendet.

**14.** Verfahren gemäss einem der Ansprüche 1 bis 13, dadurch gekennzeichnet, dass man den Ester der Formel (3) in einem Ueberschuss von 5 bis 100 Mol%, vorzugsweise 10 bis 75 Mol%, bezogen auf die Antrachinonverbindung der Formel (2), einsetzt.

**15.** Verfahren gemäss einem der Ansprüche 1 bis 14, dadurch gekennzeichnet, dass man als heterocyclische tertiäre Stickstoffbase Pyridin, 2-, 3- oder 4-Methylpyridin, 2-, 3- oder 4-Ethylpyridin, 2,3-, 2,4-, 2,5-, 2,6-, 3,4- oder 3,5-Dimethylpyridin, 5-Ethyl-2-methylpyridin, Chinolin oder 4-Methylchinolin verwendet.

**16.** Verfahren gemäss Anspruch 15, dadurch gekennzeichnet, dass man 3- oder 4-Methylpyridin oder insbesondere Pyridin verwendet.

**17.** Verfahren gemäss einem der Ansprüche 1 bis 16, dadurch gekennzeichnet, dass man 1 bis 1,6 Mol, einer heterocyclischen tertiären Stickstoffbase pro Mol Anthrachinonverbindung der Formel (2) einsetzt.

**18.** Verfahren gemäss einem der Ansprüche 1 bis 17, dadurch gekennzeichnet, dass man nach beendeter Reaktion die Reaktionsmischung abkühlt, 1 bis 2 Mol Wasser und 1 bis 2 Mol einer anorganischen Base pro Mol Anthrachinonverbindung der Formel (2) zusetzt und dann das Lösungsmittel entfernt.

**19.** Verfahren gemäss Anspruch 18, dadurch gekennzeichnet, dass man als anorganische Base Natriumhydroxid, -carbonat oder Dinatrium-hydrogenphosphat verwendet.

## Claims

**1.** A process for the preparation of a disperse dye of the formula

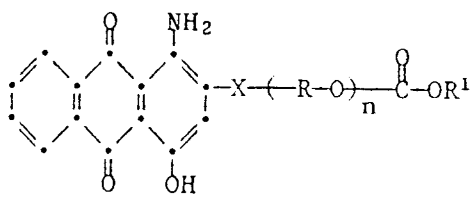

(1),

in which

X is -O- or -S-,

R is $C_2$-$C_6$ alkylene,

$R^1$ is an unsubstituted or substituted aliphatic, cycloaliphatic or aromatic radical, and

n is an integer from 1 to 3,

by reacting a compound of the formula

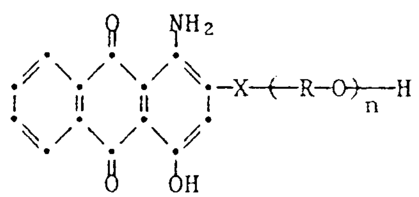

(2),

in which X, R and n are as defined above, with a haloformate of the formula

Hal-COOR$^1$ (3)

in which Hal is chlorine or bromine and $R^1$ is as defined above, which process comprises carrying out the reaction in an inert organic solvent in the presence of 1 to 2 moles of a heterocyclic tertiary nitrogen base per mole of compound of formula (2).

**2.** A process according to claim 1 for the preparation of a dye of formula (1), in which X is -O-.

**3.** A process according to claim 1 for the preparation of a dye of formula (1) in which R is an unbranched or branched alkylene radical of 2 to 6 carbon atoms which is unsubstituted or substituted by hydroxyl.

**4.** A process according to claim 2, in which R is ethylene, 1,3-propylene or 2-hydroxy-1,3-propylene.

**5.** A process according to claim 1 for the preparation of a dye of formula (1) in which n is 1 or 2.

**6.** A process according to claim 1 for the preparation of a dye of formula (1) in which $R^1$ is a straight-chain or branched, unsubstituted or substituted alkyl or alkylene group of 1 to 8 carbon atoms, a cycloalkyl group having a 5- or 6-membered ring, or is an unsubstituted or substituted benzene ring.

7. A process according to claim 6, in which $R^1$ is methyl, ethyl, n-propyl or isopropyl, n-butyl, isobutyl or tert-butyl, amyl, alkyl, chloromethyl, bromoethyl, methoxyethyl, ethoxyethyl, phenoxyethyl, benzyl, cyclohexyl, methylcyclohexyl, phenyl, chlorophenyl, methylphenyl or dimethylphenyl.

8. A process according to claim 7, in which $R^1$ is methyl, ethyl or phenyl.

9. A process according to claim 1 for the preparation of a dye of formula (1) in which X is -O-, R is an unbranched or branched alkylene radical of 2 to 6 carbon atoms which is unsubstituted or substituted by hydroxyl and $R^1$ is a straight-chain or branched, unsubstituted or substituted alkyl or alkylene group of 1 to 8 carbon atoms, a cycloalkyl group having a 5- or 6-membered ring, or is an unsubstituted or substituted benzene ring.

10. A process according to claim 9, in which X is -O-, R is ethylene, 1,3-propylene or 2-hydroxy-1,3-propylene, n is 1 or 2, and $R^1$ is methyl, ethyl or phenyl.

11. A process according to any one of claims 1 to 10, wherein the reaction is carried out at from 0° to 150°C, preferably from 40° to 100°C.

12. A process according to any one of claims 1 to 11, wherein the inert solvent used is an aromatic hydrocarbon or a halogenated or nitrated aromatic hydrocarbon, an aliphatic hydrocarbon or a halogenated aliphatic hydrocarbon or an aliphatic ketone.

13. A process according to claim 12, wherein toluene or xylene is used.

14. A process according to any one of claims 1 to 13, wherein the ester of formula (3) is used in an excess of 5 to 100 mole %, preferably of 10 to 75 mole %, based on the anthraquinone compound of formula (2).

15. A process according to any one of claims 1 to 14, wherein the heterocyclic tertiary nitrogen base used is pyridine, 2-, 3- or 4-methylpyridine, 2-, 3- or 4-ethylpyridine, 2,3-, 2,4-, 2,5-, 2,6-, 3,4- or 3,5-dimethylpyridine, 5-ethyl-2-methylpyridine, quinoline or 4-methylquinoline.

16. A process according to claim 15, wherein 3- or 4-methylpyridine or, in particular, pyridine is used.

17. A process according to any one of claims 1 to 16, wherein 1 to 1.6 moles of heterocyclic tertiary nitrogen base are used per mole of anthraquinone compound of formula (2).

18. A process according to any one of claims 1 to 17, wherein the reaction mixture is cooled upon completion of the reaction, 1 to 2 moles of water and 1 to 2 moles of an inorganic base are added per mole of anthraquinone compound of formula (2), and the solvent is then removed.

19. A process according to claim 18, wherein the inorganic base used is sodium hydroxide, sodium carbonate or disodium hydrogen phosphate.

## Revendications

1. Procédé de préparation de colorants dispersés de formule

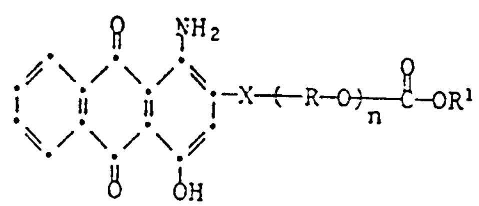

(1) ,

dans laquelle
X est -O- ou -S-,

R représente un alkylène en $C_{2-6}$,
$R^1$ représente un reste aliphatique, cycloaliphatique ou aromatique, éventuellement substitué, et
n est un nombre entier valant de 1 à 3,
qui consiste à faire réagir un composé de formule

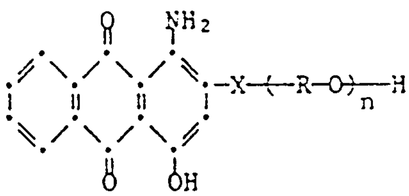

(2) ,

dans laquelle X, R et n ont les définitions données ci-dessus, avec un ester d'acide halogénoformique de formule

Hal-COOR$^1$ (3)

dans laquelle Hal est chloro ou bromo et $R^1$ a la définition donnée ci-dessus, caractérisé en ce qu'on effectue la réaction dans un solvant organique inerte en présence de 1 à 2 moles, par mole de composé de formule (2), d'une base azotée tertiaire hétérocyclique.

**2.** Procédé, selon la revendication 1, de préparation de colorants de formule (1), dans laquelle X est -O-.

**3.** Procédé, selon la revendication 1, de préparation de colorants de formule (1), dans laquelle R représente un reste alkylène non ramifié ou ramifié en $C_{2-6}$, qui n'est pas substitué ou qui est substitué par un groupe hydroxy.

**4.** Procédé selon la revendication 2, dans lequel R est éthylène, 1,3-propylène ou 2-hydroxy-1,3-propylène.

**5.** Procédé, selon la revendication 1, de préparation de colorants de formule (1), dans laquelle n vaut 1 ou 2.

**6.** Procédé, selon la revendication 1, de préparation de colorants de formule (1), dans laquelle $R^1$ représente un groupe alkyle ou alkylène en $C_{1-8}$ linéaire ou ramifié, éventuellement substitué, un groupe cycloalkyle à 5 ou 6 chaînons, ou un cycle benzénique éventuellement substitué.

**7.** Procédé selon la revendication 6, dans lequel $R^1$ est méthyle, éthyle, n- ou iso-propyle,- n-, iso- ou tert.-butyle, amyle, alkyle, chlorométhyle, bromométhyle, méthoxyéthyle, éthoxyéthyle, phénoxyéthyle, benzyle, cyclohexyle, méthylcyclohexyle, phényle, chlorophényle, méthylphényle ou diméthylphényle.

**8.** Procédé selon la revendication 7, dans lequel $R^1$ est méthyle, éthyle ou phényle.

**9.** Procédé, selon la revendication 1, de préparation de colorants de formule (1), dans laquelle X est -O-, R représente un reste alkylène non ramifié ou ramifié en $C_{2-6}$, qui n'est pas substitué ou qui est substitué par un groupe hydroxy, et $R^1$ représente un groupe alkyle ou alkylène en $C_{1-8}$, linéaire ou ramifié, éventuellement substitué, un groupe cycloalkyle à 5 ou 6 chaînons, ou un cycle benzénique éventuellement substitué.

**10.** Procédé selon la revendication 9, dans lequel X est -O-, R est éthylène, 1,3-propylène ou 2-hydroxy-1-,3-propylène, n vaut 1 ou 2 et $R^1$ est méthyle, éthyle ou phényle.

**11.** Procédé selon l'une des revendications 1 à 10, caractérisé en ce que la réaction est effectuée à 0 ° C-150 ° C, de préférence à 40 ° C-100 ° C.

**12.** Procédé selon l'une des revendications 1 à 11, caractérisé en ce que l'on utilise comme solvant inerte un hydrocarbure aromatique éventuellement halogéné ou nitré, un hydrocarbure aliphatique éventuellement halogéné ou une cétone aliphatique.

**13.** Procédé selon la revendication 12, caractérisé en ce que l'on utilise du toluène ou du xylène.

**14.** Procédé selon l'une des revendications 1 à 13, caractérisé en ce que l'on utilise l'ester de formule (3) en un excès de 5 à 100 moles %, de préférence 10 à 75 moles %, par rapport au composé anthraquinonique de formule (2).

**15.** Procédé selon l'une des revendications 1 à 14, caractérisé en ce que l'on utilise, comme base azotée tertiaire hétérocyclique, la pyridine, la 2-, 3- ou 4-méthylpyridine, la 2-, 3- ou 4-éthylpyridine, la 2,3-, 2,4-, 2,5-, 2,6-, 2,4- ou 3,5-diméthylpyridine, la 5-éthyl-2-méthylpyridine, la quinoléine ou la 4-méthylquinoléine.

**16.** Procédé selon la revendication 15, caractérisé en ce que l'on utilise la 2- ou 4-méthylpyridine ou, en particulier, la pyridine.

**17.** Procédé selon l'une des revendications 1 à 16, caractérisé en ce que l'on utilise 1 à 1,6 mole de base azotée tertiaire hétérocyclique par mole de composé anthraquinonique de formule (2).

**18.** Procédé selon l'une des revendications 1 à 17, caractérisé en ce que, après la fin de la réaction, on refroidit le mélange réactionnel, on y ajoute de 1 à 2 moles d'eau et de 1 à 2 moles d'une base minérale, par mole de composé anthraquinonique de formule (2), et on élimine ensuite le solvant.

**19.** Procédé selon la revendication 18, caractérisé en ce que l'on utilise, comme base minérale, de l'hydroxyde de sodium, du carbonate de sodium ou de l'hydrogénophosphate disodique.